# EUROPEAN PATENT SPECIFICATION

(11) **EP 0 640 756 B1**
(45) Date of publication and mention of the grant of the patent: **08.12.1999**
(21) Application number: 94113626.9
(22) Date of filing: 31.08.1994
(51) Int. Cl.: F02D 19/02, F02D 41/14, F02D 33/00, F02D 35/00, F02M 21/02

(54) **Charge forming device for gas fuelled engines**
Gemischbildungsvorrichtung für gasbetriebene Brennkraftmaschinen
Dispositif de correction du mélange pour moteurs à gaz

(30) Priority: 31.08.1993 JP 21637993; 31.08.1993 JP 21638093
(43) Date of publication of application: 01.03.1995
(73) Proprietor: YAMAHA HATSUDOKI KABUSHIKI KAISHA, Iwata-shi Shizuoka-ken, 438 (JP)
(72) Inventor: Iida, Yoshikatsu, Iwata-shi, Shizuoka-ken 438 (JP); Kurihara, Noriyuki, Iwata-shi, Shizuoka-ken 438 (JP); Suzuki, Toshio, Iwata-shi, Shizuoka-ken 438 (JP)
(74) Representative: Grünecker, Kinkeldey, Stockmair & Schwanhäusser Anwaltssozietät

(56) References cited:
- EP-A- 0 126 953
- EP-A- 0 346 989
- EP-A- 0 416 197
- EP-A- 0 510 585
- EP-A- 0 575 939
- US-A- 4 497 296
- US-A- 4 841 940

## Description

This invention relates to a charge forming device of the venturi-type for gas fuelled engines as defined in the preamble portion of claim 1.

One type of charge forming device used in gas fuelled engines employs a variable venturi-type mixer positioned at the junction of the fuel passage connection to the air intake passage. In addition to having a bleed air passage connected to the aforementioned gas fuel passage, there is also a bleed air control valve which can variably control the cross section of the bleed air passage. This type of device controls the aperture of the bleed air control valve so that λ = 1 for the oxygen concentration in the exhaust gases. The above mentioned "λ" is defined as the actual air/fuel ratio (F) divided by the theoretical air/fuel ratio (Fc); thus, λ = 1 holds normally no matter what the type or composition of gas fuel used, when the mixture is in a stoichiometric state.

The aperture of the aforementioned bleed air control valve is generally controlled using a step motor. In such a case, the aperture of the bleed air control valve is set to predetermined aperture standards for λ = 1; in other words, the main jet orifice of the mixer and the position of the metering rod (needle valve) are designed, and the dimensions are selected in such a manner that the step motor steps through a preset number of steps to the standard step level. When the number of steps is moved past the above mentioned standard step number (larger aperture), or when is it moved to a value less than that standard (smaller aperture), the air/fuel mixture is changed to be leaner and richer, respectively.

Production variations do occur during the fabrication of the main jets, needle valves and the like in manufacturing the aforementioned charge forming devices, and their tolerances also change with age. Thus, there are cases where the actual step number will be different from the predetermined step number to maintain λ = 1. The problem is that when such discrepancies arise, the adjustment range for the aperture of the bleed air control valve, and by extension, the adjustment range for the air/fuel mixture ratio, may be too narrow to make the required compensation. For example, if the step number is greater than the standard step number for λ = 1, then the latitude by which the air/fuel mixture can be changed to the lean side narrows. This results in limiting the range through which air/fuel mixture can be varied.

A further developed possibility of controlling the aperture of the bleed air control valve is a feedback control for controlling the step number for the bleed air valve so that λ = 1.

However, the problem with a feedback controlled charge forming device is that from the time when the engine is cold started until the O₂ sensor for detecting the oxygen concentration in the exhaust gas has been actuated, there can be no feedback control and therefore the above mentioned bleed air valve aperture cannot be set. Accordingly, in operating ranges where the aforementioned feedback control cannot be performed, the bleed air valve can be opened according to the above described method of using a standard number of steps.

Because of the above mentioned production variations or tolerances changing with age, there are cases where this standard step number does not conform to the λ = 1 condition. When the aforementioned feedback control cannot be performed, and when the above mentioned variations do occur, the air mixture controlled by the standard step number deviates from the λ = 1 condition and exhaust emissions deteriorate.

Particularly, under cold start conditions engine performance may be poor and the exhaust gas may be rich in harmful components.

A charge forming device as defined in the preamble portion of claim 1 is known from EP-A1-0 346 989 which discloses a venturi type carburetor unit for a gaseous fuel.

Another electronically controlled carburetor is known from US-A-4 497 296. This reference discloses open loop control if an oxygen sensor is excessively cold, for example during engine start up. The open loop control is based on a given constant duty cycle, i.e. a predetermined value.

The present invention aims at providing a charge forming device of the venturi type for gas fuel engines offering improved engine running conditions and exhaust emissions when the cold engine is started.

This technical problem is solved by a charge forming device comprising the features of claim 1.

By using a fresh value, i.e. the mid-range value, that was recorded in the memory the last time the engine was running normally under feedback control, it is possible to consider changes or deterioration of the carburetor or fuel supply nozzle.

During engine operational ranges where normal control is possible, the charge forming device for gas fueled engines controls the aperture of the bleed air control valve so that illustratively = 1 and it stores the aperture (or the number of steps) corresponding to the desired air fuel ratio. Accordingly, when the engine is cold started, or otherwise in an operating range where feedback control is not possible, the bleed air control valve can be controlled based upon the aforementioned stored aperture so that the air fuel mixture conforms to the desired ratio.

For the cases where owing to manufacturing variations or ageing the standard aperture of the bleed air control valve is different from the aperture, which corresponds to the desired air fuel ratio the corrected aperture which can be determined, for example, by feedback control, is stored in the memory means and this value becomes the target aperture when feedback control cannot be used. The desired air fuel ratio can even be maintained when conditions such as ageing require the bleed air control valve to be operated outside its standard range.

Furthermore, the auxiliary air passage provided with the auxiliary valve allows the standard aperture of the bleed air control valve to be matched to the desired air fuel ratio, by means of adjusting the cross section of the auxiliary air passage through said auxiliary valve. For example, using a feedback control the bleed air control valve can be set to adjust the standard aperture and then the auxiliary valve can be used to adjust the cross section of the auxiliary air passage until the standard aperture of the bleed air control valve is achieved. Another possibility is to set the bleed air control valve to the standard aperture and to adjust the auxiliary valve until the desired air fuel ratio is reached.

Preferred embodiments of the invention are laid down in the dependent claims.

Hereinafter the present invention is explained and illustrated in greater detail by means of a preferred embodiment thereof in conjunction with accompanying drawings wherein:

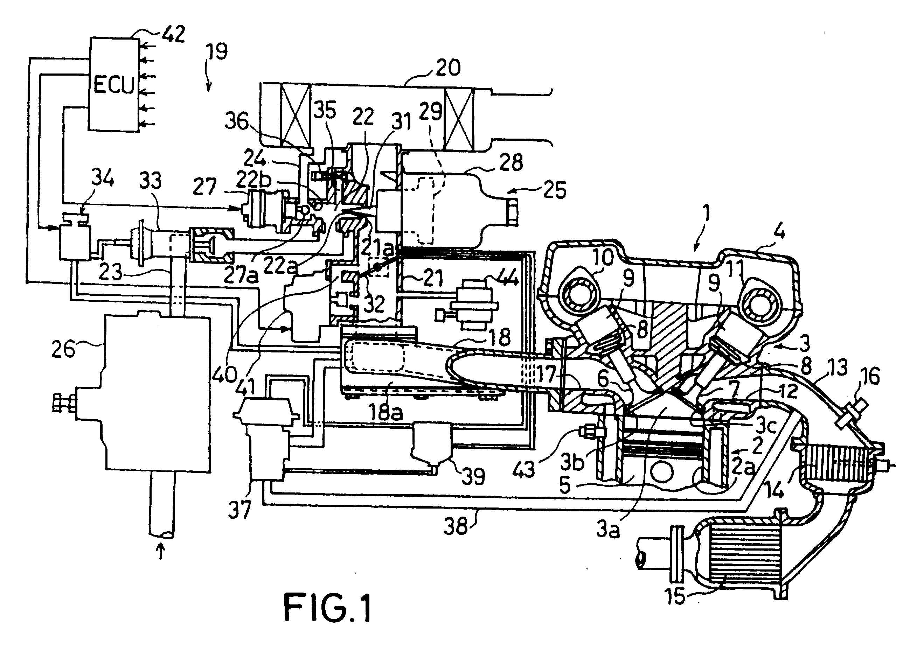

Fig. 1 is an overall component diagram of a LPG (liquid pressurized gas) fueled engine with a charge forming device according to an embodiment of the invention,

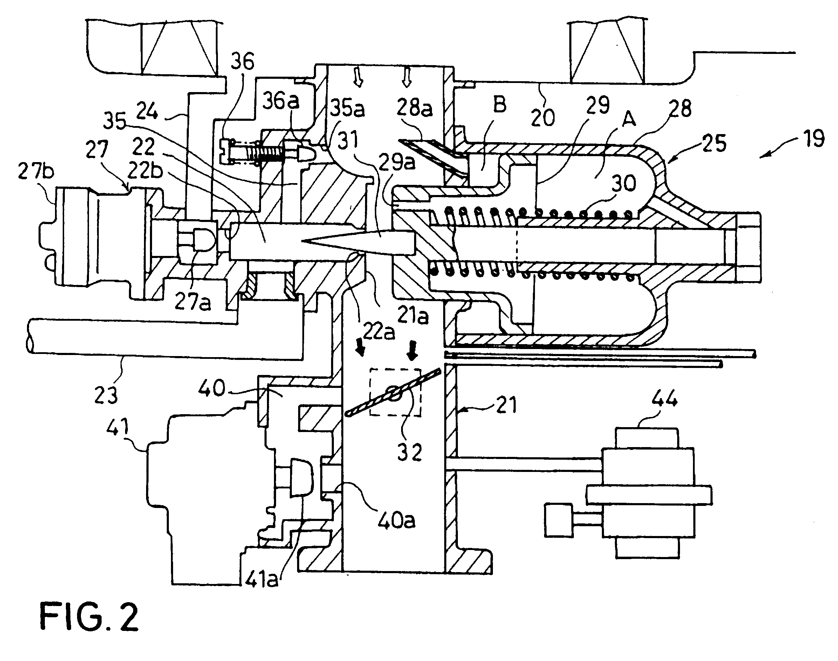

Fig. 2 shows an enlarged view of the charge forming device according to the embodiment of Fig. 1,
Fig. 3 shows a graph describing the fuel flow volume versus the air intake volume for a plurality of apertures of the bleed air control valve for different stages of ageing,
Fig. 4 is a graph showing the relationship between the output of an O₂ sensor and the step number representing the aperture of the bleed air control valve with respect to time.

In the Figures, 1 represents a water-cooled, 4-cylinder 4-valve LPG-fueled engine which is equipped with an embodiment of this invention. A cylinder head 3 affixed by bolts is mounted above the cylinder block 2 of said engine 1. Head cover 4 is affixed over said cylinder head 3. Cylinder bores 2a are present in the aforementioned cylinder block 2 which hold pistons 5 linked to the crankshaft.

In addition, there are air intake openings 3b and exhaust openings 3c in the combustion chamber area 3a of the aforementioned cylinder head comprise air intake valves 6 and exhaust valves 7, respectively. Valve springs 8 hold said valves 6, 7 in a normally closed position, but, by means of the cam action of the air intake and exhaust cams 10, 11, the lifters 9 press open the said valves.

The above mentioned exhaust valve openings 3c lead to the front wall of the cylinder head through exhaust ports 12. The openings of said exhaust ports 12 communicate with the exhaust manifold 13, catalysts 14 and 15 being located upstream and downstream of the flow juncture of the exhaust manifold 13. An O₂ sensor 16 is located just slightly further upstream of the upstream catalyst 14 in the aforementioned exhaust manifold 13.

The above mentioned O₂ sensor transduces the difference between the oxygen concentration in the exhaust gases and the oxygen concentration in the atmosphere into an electrical signal. Its design is such that if this difference in oxygen concentration is above a certain level, in other words, if the air/fuel mixture ratio (A/F) is richer than the theoretical air/fuel ratio, a detection signal shall be emitted. Accordingly, in cases where O₂ sensor 16 cannot emit a signal, i.e., when the air/fuel mixture is leaner than theoretical, or when the exhaust gas temperature is less than about 350° C, for example, the O₂ sensor may not be activated. It would also be possible to employ an O₂ sensor of the type which emits a detection signal when the air/fuel mixture is leaner than the theoretical mixture.

The above described air intake valve opening 3b leads to the rear wall of the cylinder head through an air intake port 17. The opening of this air intake port 17 on the rear wall communicates with an air intake manifold 18 comprising a plenum chamber 18a. This plenum chamber 18a in turn comprises an EGR passage 38 containing an EGR valve 37, which is driven open and closed by air intake negative pressure from a regulator 39 so that EGR gas is introduced into the above mentioned plenum chamber 18a.

Also, the opening on the upstream side of the aforementioned plenum chamber 18a connects to an air cleaner 20 by means of the charge forming device 19 of this invention. This charge forming device 19 is composed of the above mentioned air cleaner 20 and plenum chamber 18a, which are connected by air intake passage 21; further of a fuel supply chamber 22 for the gaseous fuel source and gas fuel passage 23, which form a unit with said air intake passage 21; bleed air passage 24, which, upstream of the above mentioned fuel supply chamber 22's gas fuel connection area, communicates with the inside the aforementioned air cleaner 20; a variable venturi type mixer (mixer) 25, which controls the cross section of the above mentioned air intake passage 21 in the venturi area 21a; a regulator 26, which controls the fuel pressure supplied to the aforementioned fuel supply chamber 22; and a bleed air control valve 27 which, by controlling the volume of bleed air, also controls the amount of fuel going to the fuel supply chamber 22.

The above mentioned mixer 25 is mounted in the venturi area 21a of the air intake passage 21 and is slidably mounted inside a closed, boxy chamber 28. It is equipped with a piston 29 which is seated in the aforementioned venturi area 21a. Said piston 29 is held by spring 30 so that it is pressed in the closed direction inside chamber 28. Also, the above mentioned chamber 28, which is partitioned by piston 29 into two chambers, communicates through a hole 29A in chamber A with the above mentioned venturi area 21a, and, in chamber B, through a connecting pipe 28a, with the upstream side of the above mentioned venturi area 21a.

A throttle valve 32 is positioned on the downstream side of the mixer in the above mentioned air intake passage 21; opening said throttle valve 32 increases the air intake flow volume and applies a negative pressure on the above mentioned venturi area 21a. This negative pressure is introduced into the above mentioned chamber A, which causes piston 29 to overcome the force of spring 30 and to move to enlarge the cross section in the venturi area 21a.

In addition, an idle bypass 40 has been provided in the above mentioned air intake passage 21 to bypass the throttle valve 32. An idle control valve 41 is set in said passage 40 to control its cross sectional area. When the idling rpm is below a certain value, the idle valve 41 opens idle bypass 40 and increases the idling rpm.

The above mentioned regulator 26 is a two-stage pressure decreasing regulator composed of a first pressure control valve which decreases the pressure from the fuel source to the required gas pressure, and a second pressure adjustment valve which further lowers the gas pressure from said first pressure control valve to a pressure which is slightly lower than atmospheric pressure.

A fuel cutoff valve 33 is also located downstream of regulator 26 in a fuel passage 23. This fuel cutoff valve 33 cuts the supply of fuel to the combustion chambers during rapid deceleration in order to prevent incompletely burned fuel flowing, as such, into the catalyst 14 and overheating it. During rapid deceleration, to wit, when the throttle valve 32 is rapidly closed while the engine is running at high speeds, the negative pressure in the plenum chamber 18a is transmitted to the fuel cutoff valve 33 through the switchover valve 34, and this causes said cutoff valve 33 to close the fuel passage 23.

The above mentioned bleed air control valve 27 has a valve body 27a operated by a step motor 27b in order to control the aperture 22b of the bleed air passage 24 into the fuel supply chamber. When the step number of step motor 27b is zero, the above mentioned aperture 22b is fully closed by said bleed air control valve 27 (aperture 0%); when the step number is 100, it is fully open (aperture 100%).

The main jet orifice 22a and the needle valve (metering rod) 31 have been set at the interface wall between the above mentioned fuel supply chamber and venturi area at the end of the above mentioned piston 29. The main jet orifice 22a and needle valve 31 are configured and sized in such manner as to maintain a constant A/F ratio (λ = 1) under normal operating conditions, even when there is a varying amount of intake air, in accordance with the standard step setting for the above mentioned bleed air control valve 27.

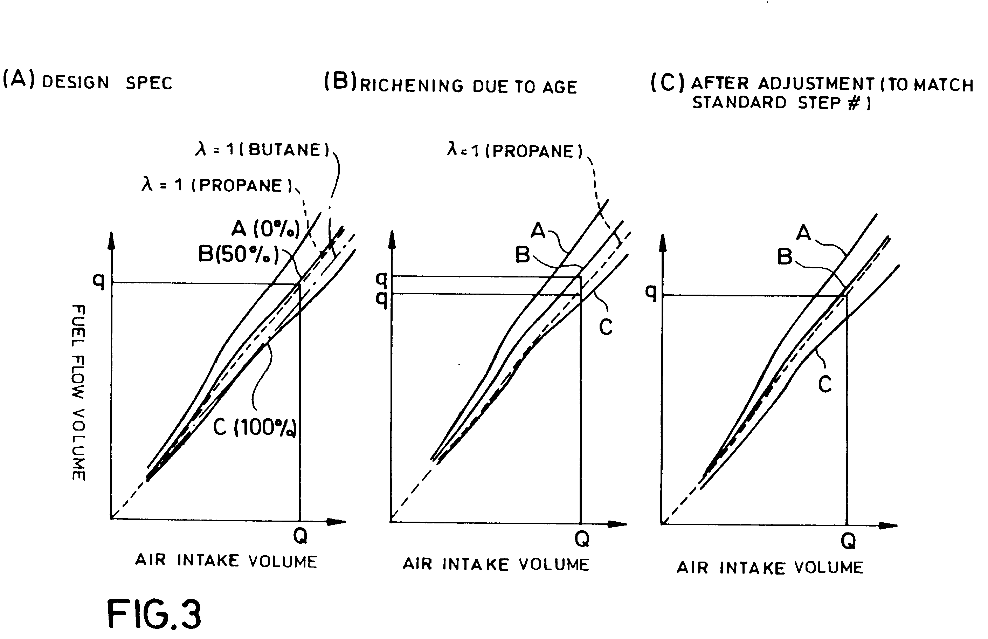

To explain this matter in detail with reference to Figure 3, which shows air intake volume on the abscissa and fuel flow volume on the ordinate, the broken line in Figure 3(a) shows the flow characteristics (computed values) for λ = 1 for the case of propane fuel. Curves A through C show different apertures for the above mentioned opening 22b controlled by a bleed air control valve 27 (called "bleed air control valve aperture" below), 0% (step 0), 50% (step 50) and 100% (step 100), respectively. Experimental results indicate that when the bleed air control valve aperture is set at 50% (step 50), the amount of fuel flow q changes with respect to variation in air intake flow Volume Q in a manner which approximately follows the above-described λ = 1. In other words, the step number of the bleed air control valve is maintained at 50 irrespective of the aperture of the throttle valve 32.

In addition, upstream of the venturi area 21a in the aforementioned air intake passage 21, an auxiliary air passage 35 communicates with the inside the above mentioned fuel supply chamber 22. A manually operated needle valve 36 is also mounted in the auxiliary air passage 35. By using the screw-type adjustment of the needle valve 36, the valve body 36a adjusts the cross section of the aperture 35a. For example, when the needle valve 36 is opened, then the amount of air flowing into the fuel supply chamber 22 increases, and if the bleed air control valve aperture is constant, then the amount of gaseous fuel will decrease by this much, changing the A/F ratio toward the lean side. However, if a feedback control is operating, the bleed air valve 27 will change in step number in order to maintain λ = 1 condition by selecting a lower step number.

42 is the ECU. This ECU 42 receives oxygen concentration signals from the O₂ sensor 16, engine temperature signals from water temperature sensor 43, air intake negative pressure signals from the negative pressure sensor 44, as well as other signals of engine rpm, throttle aperture, air intake volume and the like which identify the operating condition of the engine. It controls the operation of the above mentioned bleed air control valve 27, the fuel cutoff valve 33, switching valve 34, and idle control valve 41.

Next, the operational effects of this embodiment will be described.

In the case where the throttle valve 32 is nearly fully closed (in the idle position), the flow of intake air through venturi area 21a is at is minimum, and there is a negative pressure during idling which is very close to the atmospheric pressure. Accordingly, the piston 29 of mixer 25 projects due to the force of spring 30, to approximately fully close the venturi area 21a. The gap between the main jet orifice 22a and the needle valve 31 is also at a minimal level, so only a small amount of fuel flows. When the throttle valve 32 is then opened from this condition, the volume of air flowing into the venturi area 21a increases, which results in an increased negative pressure in said venturi area 21a, in turn causing the piston 29 to overcome the force of spring 30 and to open the venturi 21a. Fuel flow also increases.

When the amount of air intake varies due to the change in aperture of the above mentioned throttle valve 32, the said ECU 42 receives the output from O₂ sensor 16, and then controls the step number for the step motor 27b for the bleed air control valve 27 using this feedback control to maintain λ = 1. In this case, as described above, when the bleed air control valve is open 50%, the device, being designed to keep λ approximately equal to 1, sets the number of steps in the step motor 27b to about 50.

On the other hand, due to manufacturing variations or tolerances in producing the above mentioned main jet orifice 22a and the needle valve 31, etc.; or, due to a clogged air cleaner or engine age, the step number for the above mentioned λ = 1 relationship to be maintained may slip from 50 to around 70. In this case, if the step number were kept at 50, the amount of intake air Q, would be increased by q' over the specification amount q, making the air/fuel mixture too rich. Then, the feedback control, endeavoring to maintain λ = 1, would adjust the step number from 50 to 70 and as a result, there would be restricted latitude on the open side, from 50% to 30% on the range through which the bleed air control valve could be opened. This would thereby limit the control range on the lean side of engine operations.

On the other hand, if carbon deposits or the like narrowed the cross section of the main jet orifice 22a, the air/fuel mixture would shift to the lean side and the step number would be adjusted downward, from 50 to about 30. The result would be narrowed control in the rich range.

For such cases, this embodiment uses a manual valve 36 to control the cross section of the auxiliary air passage 35, and this arrangement allows it to be adjusted so that the step number conforming to the above mentioned λ = 1 can be thereby adjusted to the specification value of 50. To explain in more detail for the specific case described above where the step number had slipped to 70, first the engine would be brought to the hot idling state with the feedback control operating. In this condition, the above described manual valve 36 would be adjusted to increase the cross section of the above described aperture 36, and this would increase the volume of air flow into the fuel supply chamber 22. This would cause the gaseous fuel flow to decrease by just that amount, changing the air fuel ratio to the lean side. ECU 42 would control the step number, as a result of which the aperture of the bleed air control valve would be narrowed through its feedback control. As a result, there would be a return to the standard step number of 50 as shown in Figure 3(c).

It is possible to maintain the bleed air control valve aperture (step number) at the desired value, and to use the procedure described below to adjust the step number to the standard value, to the extent possible, by measuring the A/F value. First, the engine would be brought to the hot idle condition and then the feedback control would be cut off, and the step number returned to the standard value. Then, manual valve 36 can be adjusted until λ = 1 is achieved.

Also, if the type of gaseous fuel is changed when using this embodiment of this invention, it is possible to make adjustments so that the step number is 50. If the main jet and needle valve are designed so that the relationship established between the above mentioned air intake flow volume and the fuel flow volume with respect to the aperture of the bleed air control valve is as shown in Figure 3(a), then, if the fuel is switched to butane, the curve obtained is that shown by the single-dot line in the same figure. Accordingly, if butane is used as fuel, the manual valve 36 would be opened in a manner similar to that described for Figure 3(b) in order to set the step number to the standard of 50 steps.

Furthermore, the ECU 42 comprises a memory means for storing the step number corresponding to the desired air/fuel ratio.

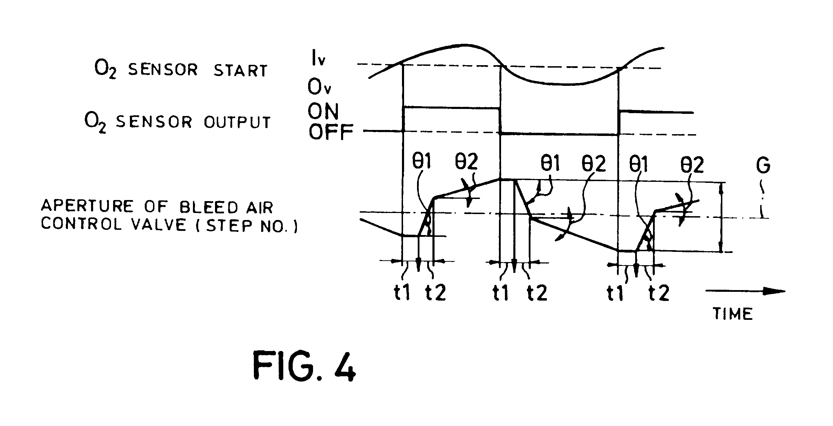

Here, what is meant by the "standard step number" is the mid-range value of the control steps over a certain interval of time. In this example, the ECU 42 stores the mid-range step value. This point will be further explained with reference to Figure 4. When the voltage generated by the O₂ sensor exceeds a certain threshold, (500 mV for example), the sensor output is deemed ON. The ECU 42 then receives this sensor output and then directs the step motor 27b to stay at the current step number for a delay interval of t1, then, during the next time interval t2, the step number is rapidly increased at a ratio of θ1, and after that, it is increased more gradually at a ratio of θ2. When the above mentioned sensor output switches over to OFF, the step number is reduced in reverse of the manner described above. The repetition of this operation causes the aforementioned mid-range value G of the step number to be found and recorded in memory.

In this embodiment, the O₂ sensor 16 is not activated during cold-start operations, and therefore feedback control is not possible at that time. The ECU 42 then controls the step motor of the bleed air control valve 27 using the mid-range G value that was stored in memory the last time the engine was running normally. This results in the aperture of the bleed air control valve 27 being set to conform to λ = 1 operating conditions, thereby assuring that the three-element catalyst effectively cleans the exhaust emissions. In cases where the engine is to be run lean when started, the step value can be increased, by a multiple of 1.05 for example, in order to implement this lean-running operation.

During times of rapid deceleration, when the throttle valve 32 is quickly closed at high speed engine operations, this rapid deceleration condition is detected by the negative pressure sensor 44. The output signal from this sensor causes the ECU 42 to emit an OPEN signal to the switchover valve 34, entailing negative pressure to the fuel cutoff valve, which closes the gaseous fuel passage 23 and prevents unburned fuel from flowing into the catalyst 14.

When the fuel is cut off as described above, the air/fuel mixture ratio becomes lean, and if the device were not configured as described in this application, the bleed air control valve would be fully closed to increase the amount of fuel flow. There would be a too rich air/fuel mixture when the engine was returned to normal operations. However, with the configuration of this embodiment, when the fuel is cut off, the ECU 42 controls the step number of step motor 27b just as it did during cold starts, by using the most recently stored mid-range value G, thereby avoiding an overly rich fuel concentration when normal engine operations are resumed.
The charge forming device for gas fueled engines of this invention stores the aperture (step number) for the bleed air control valve for an appropriate air/fuel mixture, such as λ = 1, whereby, under such conditions as cold starts, when feedback control is impossible, or when the fuel supply has been cut, the bleed air control valve aperture can be controlled to conform to a λ = 1 mixture ratio, thus increasing the cleansing efficiency for the exhaust gases.

Furthermore, the charge forming device is provided with an auxiliary air passage communicating upstream of the mixer with the air intake passage and downstream of the bleed air passage juncture with the gas fuel passage, and further uses a manually operated valve to adjust the cross section of that auxiliary air passage so that production tolerances and engine age can be compensated to maintain the bleed air control valve at the standard aperture value while maintaining the λ = 1 relationship. This expands the range over which the bleed air control valve can be opened, and by extension, effectively maintains the air fuel ratio control range at the original design specification.

## Claims

1. Charge forming device of the venturi-type for gas fuelled engines comprising an air passage (21), a gas fuel passage (23) communicated therewith and a bleed air circuit including a bleed air control valve (27) for adjusting the air/fuel ratio (λ) supplied to the engine (1), a memory means for storing the aperture of the bleed air control valve (27) corresponding to a prescribed air/fuel ratio λ and control unit (42) for controlling the bleed air control valve in response to the aperture stored, said control unit (42) comprising a feedback control circuit including a sensor means (16) for controlling the bleed air valve (27) in response to the air/fuel ratio λ,
**characterized in that**
said control unit (42) is adapted to control under cold-start operation said bleed air control valve (27) to set the aperture of the bleed air control valve (27) to conform to λ = 1 operating conditions by using a mid range value (G) that was recorded in said memory means the last time the engine was running normally under feedback control.

2. Charge forming device as claimed in claim 1, **characterized in that** the control unit is formed by an ECU (42) and is connected to an actuating means (27b) for adjusting the aperture of the bleed air control valve (27).

3. Charge forming device as claimed in claim 1 or 2, **characterized in that** said sensor means is formed by an 02-sensor (16) for detecting oxygen in the exhaust gas.

4. Charge forming device as claimed in at least one of claims 1 to 3, **characterized in that** a regulator (26) for controlling the fuel pressure is disposed in the gas fuel passage (23).

5. Charge forming device as claimed in at least one of claims 1 to 4, **characterized in that** a cut-off valve (33) for cutting off the fuel flow is disposed in the gas/fuel passage (23) downstream the regulator (26).

6. Charge forming device as claimed in at least one of claims 1 to 5, **characterized in that** an idle control valve (41) for controlling the idle state of the engine (1) is disposed in parallel with a throttle valve (32) disposed in the air passage (21).

7. Charge forming device as claimed in at least one of claims 1 to 6, **characterized in that** the control unit (42) is connected to engine operating condition sensor means (16,43,44) for controlling the bleed air valve (27), the fuel cut-off (33) and/or the idle control valve (41) in response to engine operating conditions.

8. Charge forming device as claimed in claim 7, **characterized in that** the engine operating condition sensor means are formed by a temperature sensor (43) for detecting the engine temperature, a pressure sensor (44) for detecting the pressure of the intake air and/or said 02-sensor (16) for detecting oxygen in the exhaust gas.

9. Charge forming device according to one of claims 1 to 8, **characterized in that** an auxiliary air passage (35, 35a) with an auxiliary air control valve (36, 36a) disposed therein is provided in parallel with said bleed air control valve (27).

10. Charge forming device as claimed in claim 9, **characterized in that** the auxiliary air control valve (36, 36a) is formed by a manually operated needle valve (36) for adjusting the cross section of the auxiliary air passage (35, 35a).

11. Charge forming device as claimed in claim 9 or 10, **characterized in that** the auxiliary air passage (35, 35a) is communicated with the gas fuel passage (23) downstream from the junction of the bleed air circuit (24) and the gas fuel passage (23).

## Patentansprüche

1. Gemischbildungsvorrichtung vom Venturityp für gasgetriebene Brennkraftmaschinen, enthaltend eine Luftleitung (21), eine Gaskraftstoffleitung (23), die mit dieser verbunden ist, und einen Nebenluftkreis, enthaltend ein Nebenluft-Steuerventil (27) zum Einstellen des Luft/Kraftstoffverhältnisses (λ), das der Maschine (1) zugeführt wird, eine Speichereinrichtung zum Speichern der Öffnung des Nebenluft-Steuerventils (27) entsprechend einem festgelegten Luft/Kraftstoffverhältnis λ und eine Steuereinheit (42) zum Steuern des Nebenluft-Steuerventils in Abhängigkeit der gespeicherten Öffnung, wobei diese Steuereinheit (42) einen Rückkopplungs-Steuerkreis mit einer Sensoreinrichtung (16) zum Steuern des Nebenluftventils (27) in Abhängigkeit des Luft/Kraftstoffverhältnisses λ enthält,
dadurch gekennzeichnet, daß
daß die Steuereinheit (42) dazu eingerichtet ist, im Kaltstartbetrieb das Nebenluft-Steuerventil (27) zu steuern, um die Öffnung des Nebenluft-Steuerventils (27) gemäß der Betriebsbedingungen von lambda = 1 unter Verwendung eines Mittelwertes (G) einzustellen, der in der Speichereinrichtung gespeichert wurde, als die Maschine zum letzten Mal normal unter der Rückkopplungssteuerung lief.

2. Gemischbildungsvorrichtung nach Anspruch 1, dadurch gekennzeichnet, daß die Steuereinheit durch eine ECU (42) ausgebildet und mit einer Stelleinrichtung (27b) zum Einstellen der Öffnung des Nebenluft-Steuerventils (27) verbunden ist.

3. Gemischbildungsvorrichtung nach Anspruch loder 2, dadurch gekennzeichnet, daß die Sensoreinrichtung durch einen O₂-Sensor (16) zum Erfassen des Sauerstoffs im Abgas ausgebildet ist.

4. Gemischbildungsvorrichtung nach wenigstens einem der Ansprüche 1 bis 3, dadurch gekennzeichnet, daß sich ein Stellglied (26) zum Steuern des Kraftstoffdruckes in der Gaskraftstoffleitung (23) befindet.

5. Gemischbildungsvorrichtung nach wenigstens einem der Ansprüche 1 bis 4, dadurch gekennzeichnet, daß ein Unterbrechungsventil (33) zum Unterbrechen des Kraftstoffflusses in der Gas-/Kraftstoffleitung (23) stromabwärts vom Stellglied (26) angeordnet ist.

6. Gemischbildungsvorrichtung nach wenigstens einem der Ansprüche 1 bis 5, dadurch gekennzeichnet, daß ein Leerlauf-Steuerventil (41) zum Steuern des Leerlaufzustandes der Maschine (1) parallel zur einer Drosselklappe (32) angeordnet ist, die sich in der Luftleitung (21) befindet.

7. Gemischbildungsvorrichtung nach einem der Ansprüche 1 bis 6, dadurch gekennzeichnet, daß die Steuereinheit (42) mit den Maschinenbetriebszustand-Sensoreinrichtungen (16, 43, 44) zum Steuern des Nebenluftventils (27), des Kraftstoff-Unterbrechungsventils (33) und/oder des Leerlauf-Steuerventils (41) in Abhängigkeit der Maschinenlaufzustände verbunden ist.

8. Gemischbildungsvorrichtung nach Anspruch 7, dadurch gekennzeichnet, daß die Maschinenbetriebszustand-Sensoreinrichtungen durch einen Temperatursensor (43) zum Erfassen der Maschinentemperatur, einen Drucksensor (44) zum Erfassen des Drucks der Ansaugluft und/oder einen O₂-Sensor (16) zum Erfassen des Sauerstoffs im Abgas ausgebildet sind.

9. Gemischbildungsvorrichtung nach einem der Ansprüche 1 bis 8, dadurch gekennzeichnet, daß eine Hilfsluftleitung (35, 35a) mit einem darin angeordneten Hilfsluft-Steuerventil (36, 36a) parallel zum Nebenluft-Steuerventil (27) angeordnet ist.

10. Gemischbildungsvorrichtung nach Anspruch 9, dadurch gekennzeichnet, daß das Hilfsluft-Steuerventil (36, 36a) durch ein manuelle betriebenes Nadelventil (36) zum Einstellen des Querschnitts der Hilfsluftleitung (35, 35a) ausgebildet ist.

11. Gemischbildungsvorrichtung nach Anspruch 9 oder 10, dadurch gekennzeichnet, daß die Hilfsluftleitung (35, 35a) mit der Gaskraftstoffleitung (23) stromabwärts von der Verbindung des Nebenluftkreises (24) mit der Gaskraftstoffleitung (23) verbunden ist.

## Revendications

1. Dispositif de formation du mélange de type Venturi pour moteurs à gaz, comprenant un passage d'air (21), un passage de carburant gazeux (23) en communication avec ce dernier et un circuit de purge d'air comprenant un clapet de commande de purge d'air (27) destiné à régler le rapport air / carburant (λ) alimentant le moteur (1), des moyens de mémoire destinés à stocker des données d'ouverture du clapet de commande de purge d'air (27) correspondant à un rapport air / carburant prescrit (λ) et une unité de commande (42) destinée à commander le clapet de commande de purge d'air en réponse aux données d'ouverture stockées, ladite unité de commande (42) comprenant un circuit de commande asservie comprenant des moyens de détection (16) destinés à commander le clapet de commande de purge d'air (27) en réponse au rapport air / carburant (λ), caractérisé en ce que ladite unité de commande (42) est adaptée pour commander, dans une condition de démarrage à froid, ledit clapet de commande de purge d'air (27) afin de régler l'ouverture du clapet de commande de purge d'air (27) en conformité avec des conditions de fonctionnement dans lesquelles λ = 1 en utilisant une valeur de plage intermédiaire (G) qui a été enregistrée dans lesdits moyens de mémoire la dernière fois que le moteur a tourné normalement sous commande asservie.

2. Dispositif de formation du mélange selon la revendication 1, caractérisé en ce que l'unité de commande se compose d'une unité de commande électronique ECU (42) et est reliée à des moyens de mise en action (27b) afin de régler l'ouverture du clapet de commande de purge d'air (27).

3. Dispositif de formation du mélange selon la revendication 1 ou la revendication 2, caractérisé en ce que les moyens de détection se composent d'un capteur de O₂ (16) destiné à détecter l'oxygène se trouvant dans les gaz d'échappement.

4. Dispositif de formation du mélange selon au moins l'une des revendications 1 à 3, caractérisé en ce qu'un régulateur (26) destiné à commander la pression du carburant est disposé dans le passage de carburant gazeux (23).

5. Dispositif de formation du mélange selon au moins l'une des revendications 1 à 4, caractérisé en ce qu'un clapet d'arrêt (33) destiné à couper le débit de carburant est disposé dans le passage air / carburant (23) en aval du régulateur (26).

6. Dispositif de formation du mélange selon au moins l'une des revendications 1 à 5, caractérisé en ce qu'un clapet de commande de ralenti (41) destiné à commander l'état de ralenti du moteur (1) est disposé en parallèle à un papillon des gaz (32) disposé dans le passage d'air (21).

7. Dispositif de formation du mélange selon au moins l'une des revendications 1 à 6, caractérisé en ce que l'unité de commande (42) est connectée à des moyens de détection de condition de fonctionnement du moteur (16, 43, 44) afin de commander le clapet de commande de purge d'air (27), le clapet d'arrêt de carburant (33) et / ou le clapet de commande de ralenti (41) en réponse aux conditions de fonctionnement du moteur.

8. Dispositif de formation du mélange selon la revendication 7, caractérisé en ce que les moyens de détection de condition de fonctionnement du moteur se composent d'un capteur de température (43) destiné à détecter la température du moteur, d'un détecteur de pression (44) destiné à détecter la pression de l'air d'admission et / ou dudit détecteur de O₂ (16) destiné à détecter l'oxygène se trouvant dans les gaz d'échappement.

9. Dispositif de formation du mélange selon l'une des revendications 1 à 8, caractérisé en ce qu'un passage d'air auxiliaire (35, 35a), un clapet de commande d'air auxiliaire (36, 36a) étant disposé dans celui-ci, est monté en parallèle avec ledit clapet de commande de purge d'air (27).

10. Dispositif de formation du mélange selon la revendication 9, caractérisé en ce que le clapet de commande d'air auxiliaire (36, 36a) se compose d'une soupape à pointeau actionnée manuellement (36) destinée à régler la section transversale du passage d'air auxiliaire (35, 35a).

11. Dispositif de formation du mélange selon la revendication 10 ou la revendication 11, caractérisé en ce que le passaue d'air auxiliaire (35, 35a) est en communication avec le passage de carburant gazeux (23) en aval de la connexion entre le circuit de purge d'air (24) et le passage de carburant gazeux (23).
